# FASCICULE DE BREVET EUROPEEN

(11) **EP 4 580 857 B1**
(45) Date de publication et mention de la délivrance du brevet: **11.11.2026**
(21) Numéro de dépôt: 23754311.1
(22) Date de dépôt: 09.08.2023
(51) Int. Cl.: B29C 49/42, B29C 49/68, B65G 47/84, B65G 17/32

(54) **DISPOSITIF POUR LE TRANSPORT ET LA PRÉHENSION D'UNE PRÉFORME DANS UNE UNITÉ DE CONDITIONNEMENT THERMIQUE ET UNE PINCE APTE À COOPÉRER AVEC UN DISPOSITIF DE PRÉHENSION**
VORRICHTUNG ZUM TRANSPORTIEREN UND GREIFEN EINES VORFORMLINGS IN EINER WÄRMEKONDITIONIEREINHEIT UND KLEMME MIT FUNKTION EINER GREIFVORRICHTUNG
DEVICE FOR TRANSPORTING AND GRIPPING A PREFORM IN A THERMAL CONDITIONING UNIT AND CLAMP CAPABLE OF CO-OPERATING WITH A GRIPPING DEVICE

(30) Priorité: 02.09.2022 FR 2208825
(43) Date de publication de la demande: 09.07.2025
(73) Titulaire: Sidel Participations, 76930 Octeville-sur-Mer (FR)
(72) Inventeur: FREIRE-DIAZ, Philippe, 76930 Octeville-sur-Mer (FR); FAURE, Marie-Alix, 76930 Octeville-sur-Mer (FR)
(74) Mandataire: Sidel Group
(86) Numéro de dépôt international: PCT/EP2023/072040
(87) Numéro de publication internationale: WO 2024/046728

(56) Documents cités:
- EP-A1- 3 909 743
- EP-B1- 2 173 534
- EP-B1- 2 976 207
- EP-B1- 3 678 840
- DE-A1- 102012 106 245
- US-A- 5 769 476
- US-A1- 2015 083 364
- US-B2- 9 067 742

## Description

### Domaine technique de l'invention

L'invention concerne un dispositif pour le transport et la préhension d'une préforme tubulaire avec rotation de la préforme autour de son axe principal, plus particulièrement dans une unité de conditionnement thermique, ainsi qu'une pince apte et destinée à être solidarisée sur un bras robotisé et à coopérer avec un dispositif de préhension suivant l'invention et un procédé de montage et/ou de démontage d'au moins un nez de tournette d'un dispositif de préhension suivant l'invention.

L'invention se rapporte au domaine de la fabrication de corps creux en matériau thermoplastique, fabrication pour laquelle on réalise d'abord une préforme par injection. La préforme est ensuite formée en récipient dans une installation de fabrication de récipients.

Pour ce faire, l'installation de fabrication de récipients comprend une unité de conditionnement thermique appelée également four où la préforme est conditionnée thermiquement et une unité de soufflage pour obtenir le récipient final où la préforme est formée par une opération de soufflage ou par des opérations d'étirage soufflage.

On entend par « corps creux » une préforme de récipient, ou encore un récipient final, ou éventuellement un récipient intermédiaire, c'est-à-dire tout type de corps creux comportant un corps depuis lequel s'étend un col tubulaire débouchant.

Dans la suite du document, il sera utilisé de préférence, de manière non limitative, le terme préforme.

La préforme présente généralement un corps cylindrique tubulaire qui est fermé à l'une de ses extrémités axiales et qui est prolongé à son autre extrémité par un col, lui aussi tubulaire.

Le col s'étend axialement depuis une collerette principale annulaire qui est agencée à la jonction du col et du corps de la préforme, jusqu'à une lèvre annulaire aussi appelée buvant, qui délimite une ouverture axiale du col.

Le corps de la préforme est appelé à subir une déformation plastique pour former le récipient final lors de l'opération de soufflage. Pour pouvoir procéder à cette opération de soufflage, il est nécessaire que le corps de la préforme soit porté à une température supérieure à la température de transition vitreuse du matériau. A cet effet, on procède à un conditionnement thermique de la préforme en la faisant circuler à l'intérieur d'un four, au moyen d'un dispositif de transport suivant un trajet de chauffage. Le four comporte des moyens de chauffage qui sont par exemple constitués par des lampes à infrarouge ou des diodes laser devant lesquelles les préformes se déplacent grâce au dispositif de transport.

Lors de son déplacement dans le four, la préforme est avantageusement entraînée en rotation autour de son axe principal afin d'homogénéiser le chauffage.

Les préformes sont généralement maintenues sur le dispositif de transport par des moyens de préhension.

La préforme est transférée, ou chargée, à l'entrée du four par des moyens de transfert de la préforme depuis un dispositif d'alimentation en préformes jusqu'au dispositif de transport.

L'opération consistant à saisir, par les dispositifs de préhension une préforme, est appelée « vêtissage ».

De la même manière, à la sortie du four, l'opération consistant à décharger la préforme chauffée des dispositifs de préhension, est appelée « dévêtissage ».

Traditionnellement, les dispositifs de préhension saisissent les préformes par la face interne du col grâce aux moyens de préhension. Le moyen de préhension est alors animé d'un mouvement vertical de descente selon l'axe principal de la préforme par rapport au moyen de transfert afin de permettre l'insertion des moyens de préhension dans le col. A cet effet, les dispositifs de transports circulent au-dessus des moyens de transfert.

A l'inverse, le dispositif de préhension se désolidarise des préformes grâce l'appui d'une face d'éjection de l'éjecteur sur le buvant de la préforme et la remontée du moyen de préhension selon l'axe principal de la préforme par rapport au moyen de transfert afin de permettre la séparation des moyens de préhension du col.

La trajectoire d'une préforme portée par les moyens de transfert est généralement tangente avec la trajectoire des dispositifs de transport en un point ou, au mieux, les deux trajectoires sont superposées sur une courte distance. Cette zone de superposition en un point ou sur une courte distance est appelée par la suite "zone de vêtissage".

Pour que l'opération de vêtissage puisse avoir lieu, les moyens de préhension doivent être synchronisés avec les moyens de transfert pour que les moyens de préhension soient actionnés exactement au droit de la zone de vêtissage.

De même, pour que l'opération de dévêtissage puisse avoir lieu, les moyens de préhension doivent être synchronisés avec les moyens de transfert pour que les moyens de préhension soient actionnés exactement au droit de la zone de dévêtissage.

De tels moyens de préhension sont bien connus. De plus, le document EP 3 678 840 B1 décrit un dispositif de préhension selon le préambule de la revendication 1. Le brevet européen EP0935572 décrit un dispositif pour le transport et la préhension de préformes.

Ledit dispositif de préhension comporte :
- un support d'axe vertical ;
- un mandrin d'axe monté pivot glissant par rapport au support d'axe vertical dont ledit axe vertical est coaxial à l'axe du mandrin ;
- une tournette montée sur une extrémité du mandrin, et qui comprend :
   - un nez de tournette fixé à l'une des extrémités du mandrin de manière démontable et susceptible de saisir une préforme ;
   - un éjecteur entourant au moins partiellement le nez de tournette, est solidarisé au support d'axe vertical par un moyen de fixation et susceptible d'éjecter une préforme.

Le document EP 3 909 743 A1 décrit d'autre part, une pince comprenant au moins deux branches dites principales mobiles l'une par rapport à l'autre et solidaires d'au moins une pièce mobile d'un actionneur , chaque branche principale comprenant des premiers moyens dits moyen de préhension aptes à saisir ledit nez de tournette ] Une même installation doit pouvoir convenir à la fabrication de récipients de différents modèles, et notamment de différentes capacités. Un modèle donné de préforme peut convenir à plusieurs modèles de récipients, mais pas à tous. Aussi le four doit-il pouvoir assurer la chauffe de différents modèles de préformes.

Les préformes ne se distinguent pas seulement par les formes (et tailles) de leur corps : il arrive qu'elles aient des cols de diamètres différents.

On conçoit dont aisément qu'il est alors nécessaire de remplacer chaque nez de tournette par un autre, d'un diamètre adapté au nouveau modèle de préforme à chauffer.

Le nez de tournette est ordinairement fixé sur le mandrin au moyen d'une baïonnette. Cette baïonnette se présente couramment sous forme d'une rainure pratiquée dans le mandrin, dans laquelle s'engage une goupille solidaire du nez de tournette. Pour démonter le nez de tournette, il convient de désengager la goupille de la baïonnette.

Il est toutefois nécessaire, auparavant, de procéder à la dépose de l'éjecteur car il gêne l'accès à la partie du nez de tournette par laquelle celui-ci est fixé sur le mandrin.

Cependant la séquence totale des opérations nécessaires au démontage de l'éjecteur demeure assez longue.

De fait, que le démontage de l'éjecteur soit ou non automatisé, le besoin persiste de le simplifier. Tel est l'objectif de l'invention.

### Résumé de l'invention

L'invention propose, selon un premier objet, un dispositif de préhension d'une préforme de récipient en matière thermoplastique dans une unité de conditionnement thermique, qui comprend au moins :
- un support comprenant un trou d'axe vertical ;
- un mandrin d'axe de révolution dont une première extrémité est montée dans le trou du support suivant une liaison à pivot glissant par rapport audit support, ledit axe vertical du support et l'axe du mandrin étant ainsi coaxiaux ;
- une tournette montée sur l'extrémité opposée libre du mandrin, et qui comprend au moins :

- un nez de tournette solidarisé de manière démontable à l'extrémité libre du mandrin, ledit nez de tournette étant destiné à recevoir le col de la préforme ;
- un éjecteur se solidarisant au support par des moyens de fixation amovibles, le mandrin et le nez de tournette s'étendant coaxialement à l'éjecteur de telle manière que l'extrémité libre du nez de tournette fasse saillie dudit éjecteur, ledit éjecteur ayant une forme sensiblement tubulaire et comprenant à l'une de ces extrémités au moins une surface dite d'éjection de ladite préforme ;

Le dispositif de préhension selon l'invention est caractérisé en ce que lesdits moyens de fixation amovibles comprennent au moins un mors solidaire de l'éjecteur et/ou du support, chaque mors comportant des moyens mâle ou femelle apte à coopérer avec des moyens complémentaires femelle ou mâle solidaires du support ou respectivement de l'éjecteur, et au moins un moyen élastique apte à maintenir dans une position dite de verrouillage les moyens mâle ou femelle des mors dans les moyens femelle ou mâle du support ou respectivement de l'éjecteur.

Selon un autre aspect de l'invention, chaque mors pivote autour d'un axe d'articulation orthogonal au mandrin d'axe de révolution.

Selon un autre aspect de l'invention, ledit mors s'étend dans un logement pratiqué dans une paroi périphérique de l'éjecteur ou du support lorsque ledit mors est en position dite verrouillage, tout ou partie dudit mors faisant saillie dudit logement en position dite de déverrouillage.

Selon un autre aspect de l'invention, les deux mors sont diamétralement opposés.

Selon un autre aspect de l'invention, chaque mors comprend une première partie et une deuxième partie s'étendant de part et d'autre de l'axe d'articulation, ladite première partie comprenant lesdits moyens mâle ou femelle apte à coopérer avec des moyens complémentaires femelle ou mâle solidaires du support ou de l'éjecteur et ladite deuxième partie comprenant une surface dite d'actionnement de sorte que, en exerçant une pression et/ou en relâchant ladite pression sur la surface d'actionnement, chaque mors passe de sa position de déverrouillage à sa position de verrouillage et inversement.

Selon un autre aspect de l'invention, le moyen de rappel élastique est un joint torique ou un ressort annulaire à spires ou un ressort de torsion.

Selon un autre aspect de l'invention, une partie dudit moyen de rappel élastique prend appui dans une gorge pratiquée dans la paroi périphérique de l'éjecteur ou du support.

L'invention propose, selon un second objet, une pince apte et destinée à être solidarisée sur un bras robotisé et à coopérer avec un dispositif de préhension.

La pince selon l'invention est caractérisée en ce qu'elle comprend au moins deux branches dites principales mobiles l'une par rapport à l'autre et solidaires d'au moins une pièce mobile d'un actionneur, chaque branche principale comprenant des premiers moyens dits moyens de préhension aptes à saisir ledit nez de tournette et des deuxièmes moyens dits moyens de préhension aptes à coopérer avec lesdits mors des moyens de fixation du dispositif de préhension pour déplacer les mors depuis leur position de verrouillage vers une position de déverrouillage.

Selon un autre aspect de l'invention, les moyens de préhension de chaque branche principale comprennent une branche secondaire s'étendant depuis la branche principale en direction de la seconde branche principale, l'extrémité libre de la branche secondaire étant apte à prendre appui sur le nez de tournette pour le saisir.

Selon un autre aspect de l'invention, l'extrémité libre de chaque branche secondaire est munie d'un embout en élastomère.

Selon un autre aspect de l'invention, ledit embout est solidarisé à l'extrémité libre de chaque branche secondaire de manière amovible.

Selon un autre aspect de l'invention, les deuxièmes moyens de préhension de chaque branche principale comprennent un poussoir apte à actionner les mors des moyens de fixation du dispositif de préhension.

Selon un autre aspect de l'invention, les deuxièmes moyens de préhension de chaque branche principale comprennent au moins un patin dit d'éjecteur auquel est solidarisé ledit poussoir, ledit patin d'éjecteur étant apte à saisir ledit éjecteur.

Selon un autre aspect de l'invention, le poussoir est solidarisé au patin d'éjecteur de telle manière qu'il actionne le mors simultanément à la saisie de l'éjecteur par le patin d'éjecteur.

Selon un autre aspect de l'invention, ledit poussoir comprend une tige s'étendant parallèlement à la branche secondaire et apte à se déplacer parallèlement à cette dernière, l'extrémité libre dudit poussoir comprenant une surface apte à prendre appui sur le mors correspondant du moyen de fixation du dispositif de préhension.

Selon un autre aspect de l'invention, ladite tige s'étend à travers un trou pratiqué dans la branche principale, un moyen élastique étant positionné entre la branche principale et le patin pour amortir le déplacement du poussoir.

Selon un autre aspect de l'invention, ledit moyen élastique consiste en un ressort hélicoïdal s'étendant autour de la tige et dont une première extrémité prend appui sur la branche principale et dont l'extrémité opposée prend appui sur le patin.

Selon un autre aspect de l'invention, les deuxièmes moyens de préhension comportent deux guides s'étendant parallèlement à la tige, de part et d'autre de cette dernière, solidaires de la branche principale et le long desquels est apte à coulisser le patin d'éjecteur.

L'invention propose, selon un troisième objet, un procédé de démontage d'au moins un nez de tournette d'un dispositif de préhension selon l'invention comprenant au moins les opérations suivantes de :
- saisie du nez de tournette du dispositif de préhension pour le bloquer en rotation et en translation le long de son axe de révolution ;
- actionnement des mors du dispositif de préhension pour les déplacer depuis leur position de verrouillage vers leur position de déverrouillage ;
- extraction simultanément du nez de tournette et de l'éjecteur du dispositif de préhension ;
- dépose du nez de tournette et de l'éjecteur dans une zone de stockage.

Selon un autre aspect de l'invention, le procédé de montage d'au moins un nez de tournette d'un dispositif de préhension comprenant au moins les opérations suivantes de :
- saisie simultanément d'un nez de tournette et d'un éjecteur monté sur ledit nez de tournette et positionnés dans une zone de stockage ;
- positionnement du nez de tournette et de l'éjecteur sur le support du dispositif de préhension ;
- actionnement des mors du dispositif de préhension pour les déplacer depuis leur position de déverrouillage vers une position de verrouillage ;
- libération du nez de tournette et de l'éjecteur.

### Brève description des figures

D'autres caractéristiques et avantages de l'invention apparaitront au cours de la lecture de la description détaillée qui va suivre pour la compréhension de laquelle on se reportera aux dessins annexés que nous décrivons brièvement par la suite.
[Fig.1] est une vue générale schématique d'une installation de production de récipients vue de haut ;
[Fig.2] est une vue de détail du médaillon de la [Fig.1] représentant une préforme ;
[Fig.3] est une vue d'ensemble d'une tournette ;
[Fig.4] est une vue en perspective d'un nez de tournette et d'un éjecteur ;
[Fig.5] est une vue du nez de tournette ;
[Fig.6] est une vue de l'éjecteur dont les mors sont en position déverrouillée ;
[Fig.7] est une vue de l'éjecteur dont les mors sont en position verrouillée ;
[Fig.8] est une vue de la pince dans une position ouverte ;
[Fig.9] est une de la pince dans une position intermédiaire ;
[Fig.10] est une vue de la pince dans une position de saisie du nez de tournette de l'éjecteur ;

### Description détaillée de l'invention

Dans la suite de la description, des éléments présentant une structure identique ou des fonctions analogues seront désignés par une même référence.

On adoptera à titre non limitatif les orientations longitudinale, verticale et transversale en référence au trièdre (L, V, T) représenté sur les figures.

Par convention, les directions longitudinale et transversale sont déterminées de manière fixe par rapport aux dispositifs de moulage de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

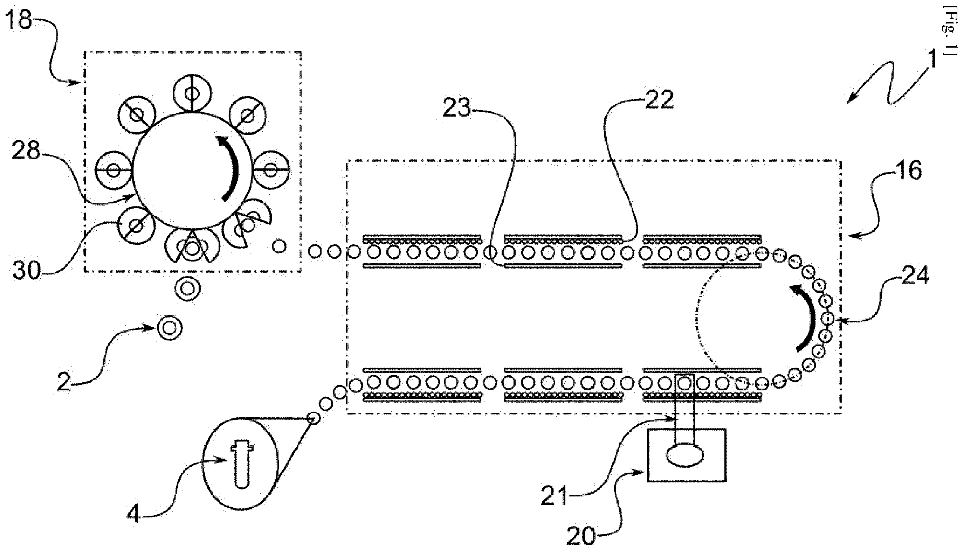

On a représenté schématiquement à la [Fig.1], une installation 1 de production en série de récipients 2 en matériau thermoplastique à partir de préformes 4.

Dans la suite de la description, les préformes 4 et les récipients 2 se déplacent dans l'installation de production le long d'un trajet de circulation depuis l'amont vers l'aval. Les préformes 4 sont déplacées en file le long d'un trajet de chauffe par des moyens de convoyage qui seront détaillés par la suite.

De manière non limitative, les récipients 2 sont ici des bouteilles. Le matériau thermoplastique est par exemple ici formé par du polyéthylène téréphtalate, désigné par la suite sous son acronyme "PET".

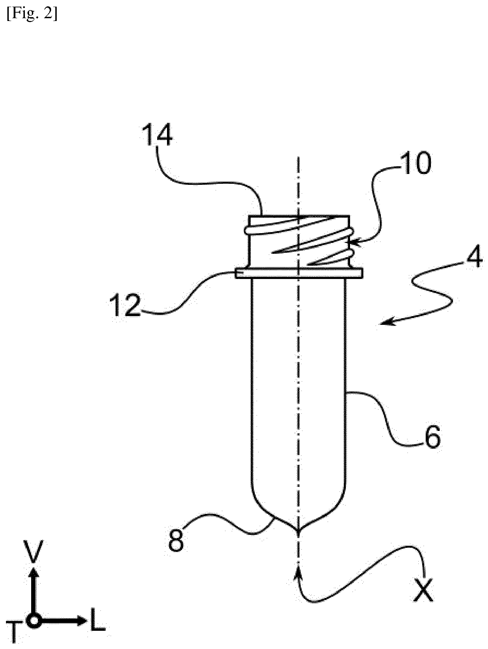

On a représenté à la [Fig.2], un exemple d'une telle préforme 4. La préforme 4 présente un axe "X" principal représenté verticalement à la figure. Elle présente un corps 6 cylindrique à paroi tubulaire fermé à l'une de ses extrémités axiales par un fond 8, et qui est ouvert à son autre extrémité par un col 10, lui aussi tubulaire. Le col 10 est délimité vers le bas par une collerette 12 et vers le haut par un bord d'extrémité supérieur appelé buvant 14.

Le col 10 présente généralement sa forme définitive tandis que le corps 6 de la préforme 4 est destiné à subir une déformation relativement importante pour former le récipient 2 final lors d'une étape de formage.

Comme représentée à la [Fig.1], l'installation de fabrication de récipients comprend au moins une unité de conditionnement thermique 16, une unité de formage 18 et un manipulateur 20.

L'unité de conditionnement thermique 16 aussi appelée four permet de chauffer une succession de préformes 4 à une température de référence. La température de référence est choisie pour que le corps 6 de chaque préforme 4 en sortie d'unité de conditionnement thermique 16 soit dans un état malléable permettant une déformation du corps 6 de la préforme chauffée afin de former le récipient 2 dans l'unité de formage 18. La température de référence est comprise entre la température de transition vitreuse et la température de cristallisation de la matière plastique de la préforme 4. Dans le cas du PET, la température de référence est par exemple voisine de 110°. La valeur de la température de référence peut varier en fonction du produit avec lequel le récipient 2 va être rempli ou en fonction de la technique de remplissage du récipient. Ainsi, la température de référence est différente pour un remplissage à chaud ou pour un produit carbonaté par exemple.

Selon le mode de réalisation représenté sur la [Fig.1], l'unité de conditionnement thermique 16 est un four à défilement, dans lequel les préformes 4 sont transportées pour être exposées à une pluralité de sources 22 de rayonnement de chauffage.

A cet effet, l'unité de conditionnement thermique 16 comprend un moyen de convoyage 24 des préformes 4 au travers de l'unité de conditionnement thermique 16 selon un trajet de chauffage s'étendant entre une entrée et une sortie de l'unité de conditionnement thermique 16.

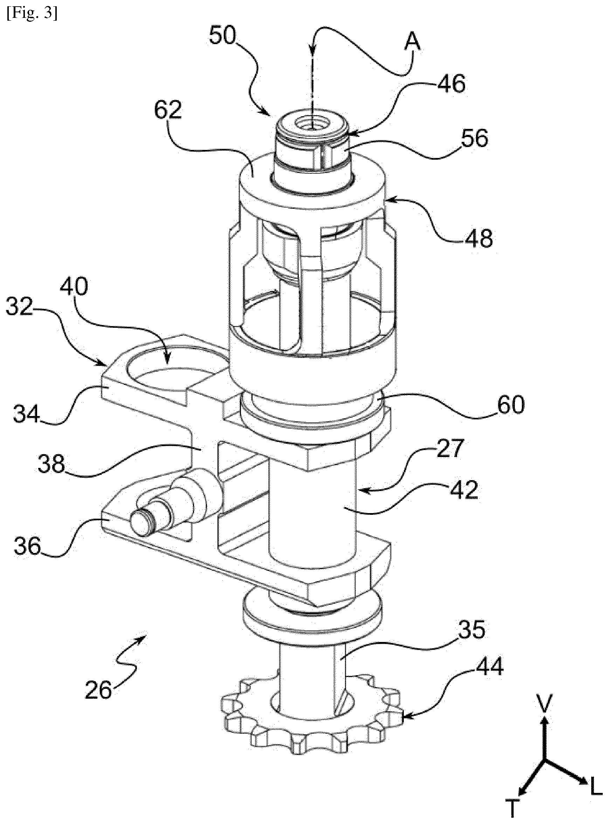

Comme représenté aux Figures 1 et 3, le moyen de convoyage 24 comprend une succession de dispositifs de préhension, chacun étant apte à supporter une préforme 4, montés sur une chaîne, se déplaçant le long du trajet de chauffe dans l'unité de conditionnement thermique 16.

Dans un autre mode de réalisation non représenté, le moyen de convoyage 24 comprend par exemple une succession de dispositifs de préhension 26, chacun étant apte à supporter une préforme, montés sur une navette de type moteur linéaire circulant sur une boucle fermée magnétique. Le mouvement de chacune de ces navettes étant commandé indépendamment les uns des autres par l'unité de contrôle (non représentée sur les figures).

Chaque dispositif de préhension 26 est, par exemple, apte à recevoir une préforme 4 par emmanchement du col 10 sur une tournette 27 telle que représenté sur la [Fig.3]. Chaque tournette 27 est, par exemple, mobile en rotation par rapport à la chaîne autour d'un axe A de rotation confondu avec l'axe principal X d'une préforme 4 lorsque celle-ci est supportée par la tournette 27.

Le four comprend également une cavité de chauffe qui comprend deux parois latérales face à face et au moins l'une de ces parois étant celle qui supporte plusieurs sources 22 de rayonnement, disposées les unes au-dessus des autres et les unes à côté des autres en regard des préformes.

En d'autres termes, l'unité de conditionnement thermique 16 comprend une pluralité de sources 22 de rayonnement répartis le long du trajet de chauffe et selon une hauteur correspondant sensiblement à la hauteur des préformes de sorte que toute la hauteur du corps 6 de chaque préforme est exposée aux sources 22 de rayonnement sur le trajet de la préforme dans l'unité de conditionnement thermique 16. En faisant tourner les préformes autour de leur axe principal X, les tournettes 27 permettent d'exposer uniformément tout le corps 6 des préformes aux sources 22 de rayonnement. Dans ce mode de réalisation particulier, les sources 22 de rayonnement sont réparties sur un côté seulement de ce trajet, et une paroi 23 réfléchissante est disposée de l'autre côté du trajet de chauffage pour réfléchir la chaleur vers les préformes.

Dans un autre mode de réalisation non représentée, les sources 22 de rayonnement peuvent être réparties de part et d'autre du trajet de chauffage sans pour autant sortir du cadre de l'invention.

Il convient également de noter que les sources 22 de rayonnement sont agencées, le cas échéant, pour ne pas soumettre le col 10 à la chaleur émise par les sources 22 de rayonnement. En effet, comme indiqué précédemment, seul le corps 6 de la préforme est formé pour produire le récipient 2. Par conséquent, le col 10 ne doit pas être déformé au cours du formage et ne doit pas être chauffé. Pour éviter le chauffage du col 10, le four 16 peut comprendre un dispositif de ventilation positionné au droit des cols pour évacuer la chaleur susceptible d'être absorbée par les cols.

Chaque source 22 de rayonnement est formée par une lampe à incandescence émettant un rayonnement infrarouge.

Dans un autre mode de réalisation, chaque source 22 de rayonnement est une diode laser émettant un rayonnement infrarouge.

En d'autres termes, chaque source 22 de rayonnement est un laser (par exemple des diodes laser) émettant dans l'infrarouge et organisés par juxtaposition et/ou superposition pour former une ou plusieurs matrices.

Dans un autre mode de réalisation, chaque source 22 de rayonnement est un générateur de micro-ondes.

Puis, une fois que la préforme 4 a été conditionnée thermiquement dans l'unité de conditionnement thermique 16, elle est transférée à l'unité de formage 18 pour y être formée.

L'unité de formage 18 de récipients 2 à partir de préformes 4 se compose d'une roue de formage 28 déplaçant en rotation une pluralité de postes de formage d'une entrée à une sortie, à laquelle une succession de récipients 4 sont formés à partir des préformes 4, puis sont extraits, comme représentée sur la [Fig.1]. L'axe de rotation de la roue de formage 28 est, par exemple, sensiblement parallèle à l'axe principal X des préformes 4 lorsqu'elles sont transportées par la roue de formage 28.

Chaque poste de soufflage comprend un moule 30 formant une cavité de moulage présentant la forme du récipient 2 à former et agencé pour recevoir une préforme 4 de façon que le corps 6 de la préforme s'étende dans la cavité de moulage.

L'installation de fabrication de récipients comprend également un manipulateur 20 pourvu d'un bras 21 robotisé équipé à l'une de ses extrémités d'une pince de démontage de tournettes 27. L'ensemble du bras 21 robotisé et de la pince est mobile au moins partiellement à l'aplomb du four, de sorte à assurer le démontage des tournettes 27. La pince sera décrite plus en détail dans la suite de la description.

Comme représenté à la [Fig.3], le dispositif 26 préhension comprend un support 32 aussi appelé maillon, qui bien que représenté individuellement sur la [Fig.3], est en fait intégré à une chaîne qui comprend une multitude de tels maillons.

Dans ce mode de réalisation, le maillon 32, de préférence métallique (par ex. en acier), comprend deux branches 34, 36 superposées, qui font saillie latéralement d'une âme 38. Les branches 34, 36 sont percées de trous 40 coaxiaux qui définissent conjointement un axe principal.

Le dispositif 26 de préhension comprend par ailleurs :
- un mandrin 42 d'axe de révolution est monté dans les trous 40 du maillon 32 suivant une liaison à pivot glissant par rapport au maillon 32 Ainsi, l'axe principal des trous 40 et l'axe de révolution du mandrin 42 sont coaxiaux ;
- un pignon 44 est solidaire en rotation à l'une des extrémités libre du mandrin 42. Le pignon 44 est avantageusement formé sur un embout 45 en forme de bobine, emmanché en force sur le mandrin 42 ;
- une tournette 27 est montée sur l'autre extrémité du mandrin et qui comprend au moins :
- un nez 46 de tournette qui est fixé au mandrin de manière démontable, en l'espèce par l'intermédiaire d'une baïonnette (non représentée sur la figure). Le nez de tournette est destiné à recevoir le col 10 de la préforme 4 ;
- un éjecteur 48 est solidarisé au support 32 par des moyens de fixation amovibles qui seront détaillés ultérieurement dans la description. Cet éjecteur 48 a une forme sensiblement cylindrique et comprend à l'une de ses extrémités au moins une surface dite d'éjection de la préforme ;

Le mandrin et le nez 46 de tournette s'étendent coaxialement à l'éjecteur 48 de telle manière que l'extrémité libre du nez 46 de tournette fasse saillie de l'éjecteur 48.

Selon une variante d'exécution, non représenté sur les figures, le support 32 peut être un moteur linéaire comprenant également au moins un trou et dans lequel le mandrin, la tournette, le pignon sont montés pivot glissant, sans pour autant sortir du cadre de l'invention.

Comme représentée sur les figures 3 à 5, la tournette 27 comprend le nez 46 de tournette et l'éjecteur 48.

La tournette 27 est un équipage mobile destiné à assurer la préhension d'une préforme 4 par son col 10, et monté sur le maillon 32 avec deux degrés de liberté : une translation suivant l'axe A principal et une rotation autour de l'axe A principal.

Dans ce mode de réalisation, le nez 46 de tournette comprend une tête 50 à expansion radiale qui est insérée en force à l'intérieur du col 10 de la préforme 4, un radiateur 52, et un arbre 54.

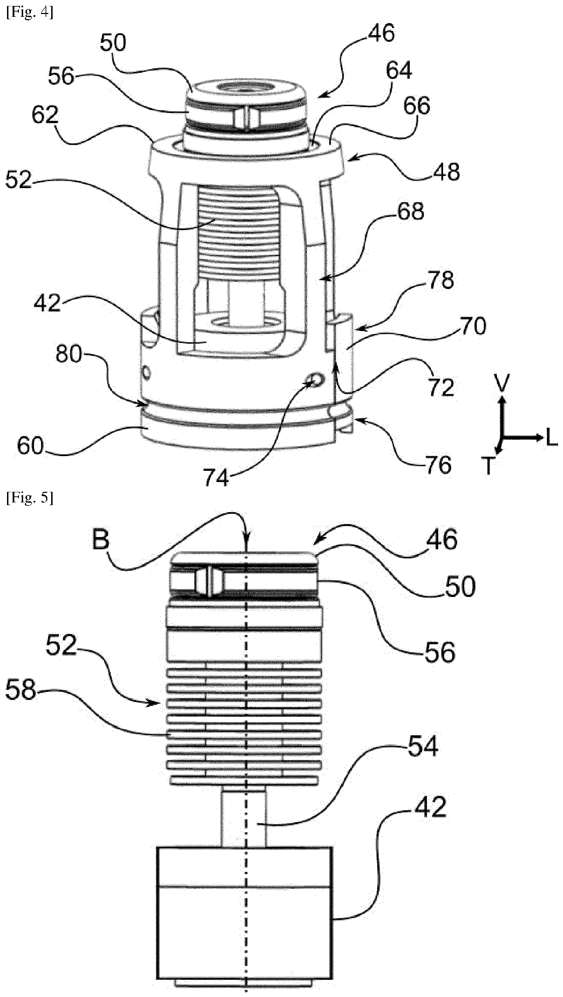

Comme représentée à la [Fig.5], la tête 50 cylindrique d'axe "A" vertical dont le diamètre extérieur est légèrement inférieur au diamètre intérieur du col 10 de manière qu'il subsiste un jeu radial de coulissement entre la tête 50 et le col 10 lorsque la tête 50 est emmanchée dans le col 10.

La tête 50 comporte des bagues 56 qui se présentent sous la forme de secteurs d'anneau. Chaque bague 56 est reçue coulissante radialement dans un logement radial de la tête 50 entre :
- une position rétractée vers l'axe "A" de la tête permettant le coulissement vertical de la tournette par rapport au col 10 ;
- une position d'expansion radiale dans laquelle elles sont susceptibles d'être serrées contre la face cylindrique interne du col 10 pour retenir la préforme 4 par frottement.

Les bagues 56 sont contraintes élastiquement vers leur position d'expansion au moyen d'un anneau élastique qui est intercalé radialement entre le fond du logement réalisé dans la tête et la bague 56.

La tête 50 est délimitée verticalement vers le bas par un tronçon de plus grand diamètre délimitant une face annulaire d'épaulement qui est tournée vers le haut et qui forme une face [N] de positionnement contre laquelle le buvant 14 est reçu en butée verticale lors de l'emmanchement de la tête 50 dans le col 10.

Le radiateur 52 est agencé sous la tête 50 et comprend des ailettes 58 qui présentent une forme globalement cylindrique d'axe vertical A principal, coaxial avec l'axe A de la tête et dont le diamètre est équivalent au diamètre du tronçon de plus grand diamètre que la tête.

L'arbre 54 est fixé à l'une de ces extrémités à l'ensemble radiateur et tête, alors que l'autre extrémité de l'arbre 54 est fixé au mandrin de manière démontable, en l'espèce par l'intermédiaire d'une baïonnette (non représentée sur les figures).

La tête, le radiateur, l'arbre, le mandrin sont coaxiaux.

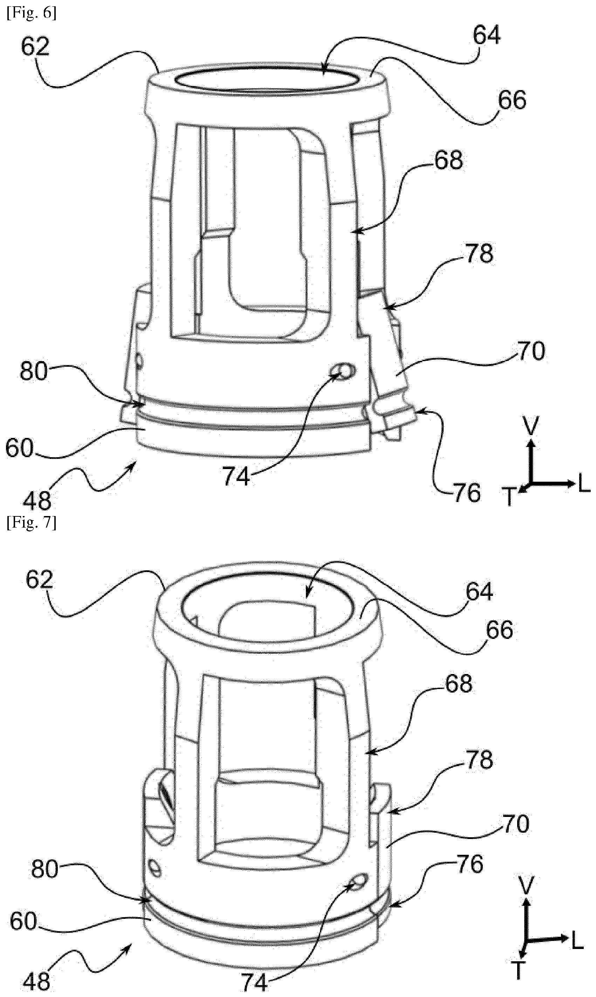

Comme représenté aux figures 6 et 7, l'éjecteur 48 comprend :
- une embase 60 grossièrement cylindrique d'axe A, qui inclut un trou [S] central, un plateau 62 percé d'un alésage 64 central et qui définit une face 66 d'éjection,
- une série de pieds 68 (ici au nombre de quatre) qui relient l'embase 60 au plateau 62, et qui définissent entre eux des ajours.

Le trou [S] et l'alésage 64 sont rentrés par rapport à un axe commun.

L'embase 60 comprend également au moins un moyen de fixation aussi appelé mors 70 qui permet de solidariser l'éjecteur 48 au support 32.

Dans le mode de réalisation illustré aux figures 6 et 7, ces mors 70 sont au nombre de 2 et diamétralement opposés.

Chaque mors 70 s'étend dans un logement 72 pratiqué dans l'embase 60 et pivotant autour d'un axe 74 d'articulation qui est orthogonal à l'axe 74 de l'embase 60.

Chaque mors 70 comprend une première partie 76 et une deuxième partie 78 s'étendant de part et d'autre de l'axe 74 d'articulation.

La première partie 76 est agencée au-dessous de l'axe 74 d'articulation et comprend des moyens mâles ou femelles aptes à coopérer avec des moyens complémentaires femelles ou mâles solidaires du support 32 ou de l'éjecteur (non représenté sur les figures).

La deuxième partie 78 est agencée au-dessus de l'axe 74 d'articulation et comprend une surface dite d'actionnement de sorte que, en exerçant une pression et/ou en relâchant la pression sur la surface d'actionnement, chaque mors 70 passe de sa position de déverrouillage (comme illustré à la [Fig.6]) à sa position de verrouillage (comme illustré à la [Fig.7]) et inversement.

L'embase 60 comprend également une gorge 80 annulaire qui est réalisée à la fois dans la paroi de l'embase 60 et à la fois dans une des parties du mors 70. Cette gorge 80 permet de loger un moyen de rappel élastique (non représenté sur les figures) qui assure la position du mors 70 lorsqu'il n'est pas contraint par une pince, et inversement.

Pour effectuer un changement de tournette notamment dans le cas d'un changement de format de préforme 4, la tournette peut être démontée manuellement par un opérateur, ou automatiquement par un manipulateur 20 pourvu d'une pince permettant de démonter les tournettes.

Comme représenté schématique sur la [Fig.1], le manipulateur 20 comprend un bras 21 robotisé et une pince (non représentée sur la [Fig.1]) destinée à saisir la tournette, c'est-à-dire, l'ensemble éjecteur 48 et nez 46 de tournette simultanément.

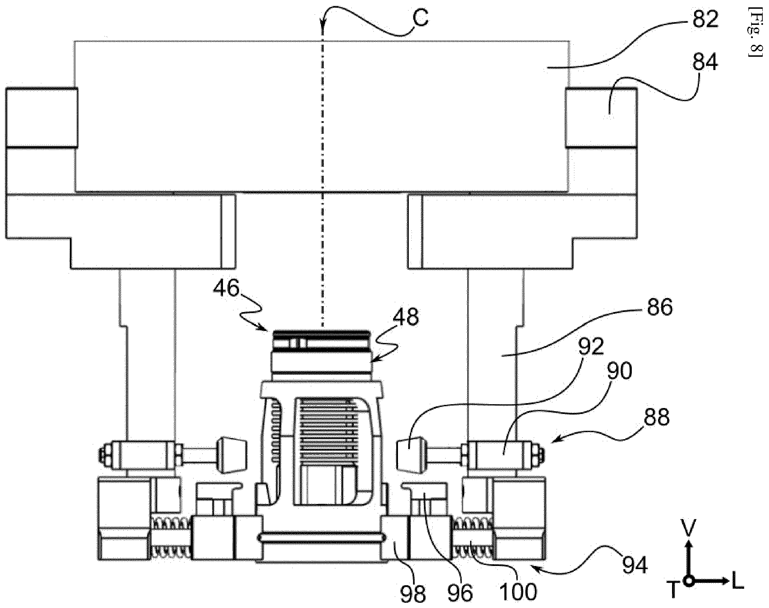

Comme représentée aux figures 8 à 10, la pince se positionne au-dessus de la tournette pour la démonter du support 32 et inversement, pour la remonter sur le support 32.

La pince comporte un socle 82 ayant la forme d'un pavé droit comprenant un axe C situé au centre de sa face supérieure. Le bras 21 robotisé est fixé au niveau de la face supérieure du socle 82. Le socle 82 comprend au moins un actionneur (non représenté sur les figures) dont des parties mobiles 84 s'escamotent des faces latérales du pavé droit. L'actionneur peut être pneumatique, tel qu'un vérin, ou électrique, tel qu'un moteur électrique type brushless.

Deux branches dites principales 86 sont montées mobiles notamment en translation l'une par rapport à l'autre. Chaque branche principale 86 est orientée verticalement et parallèle à l'axe A du socle 82. Chaque branche principale 86 est solidaire à l'une de ses extrémités à la partie mobile 84 de l'actionneur.

Chaque branche principale 86 comprend à l'autre extrémité un premier moyen de préhension 88 apte à saisir le nez 46 de tournette. Ce moyen de préhension se constitue d'une branche secondaire 90 qui s'étend depuis une première branche principale 86 en direction de la seconde branche principale 86. Chaque branche secondaire 90 est orthogonale à l'axe C du socle 82. Chaque branche secondaire 90 comprend des moyens de réglage permettant de positionner verticalement le premier moyen de préhension 88 par rapport à la branche principale 86 afin que chaque branche secondaire 90 soit en vis-à-vis du nez 46 de tournette à saisir. L'extrémité libre de cette branche secondaire 90 est munie d'un embout 92 notamment un matériau déformable pour saisir le nez 46 de tournette au niveau du radiateur. Cet embout 92 est monté amovible par rapport à la branche secondaire 90 afin d'être démonté en cas d'usure de ce dernier.

Un deuxième moyen de préhension 94 est situé sur la branche principale 86 et à l'opposé de la partie solidaire de l'actionneur.

Ce deuxième moyen de préhension 94 est apte à coopérer avec le moyen de fixation de l'éjecteur 48 pour déplacer les mors 70 depuis leur position de verrouillage vers une position de déverrouillage. Chaque deuxième moyen de préhension 94 comprend un poussoir 96 formant une excroissance radiale vers l'axe A destiné à coopérer avec le moyen de fixation de l'éjecteur 48 et notamment avec la surface dite d'actionnement du moyen de fixation de sorte que, en exerçant une pression et/ou en relâchant ladite pression sur la surface d'actionnement, chaque mors 70 passe de sa position de déverrouillage à sa position de verrouillage et inversement.

En référence aux figures 8 à 10, le poussoir 96 comprend une tige s'étendant parallèlement à la branche secondaire 90 et apte à se déplacer parallèlement à cette dernière, l'extrémité libre du poussoir 96 comprenant une surface apte à prendre appui sur le mors 70 du moyen de fixation.

Le deuxième moyen de préhension 94 comprend également au moins un patin 98 dit d'éjecteur. Ce patin 98 d'éjecteur est apte à saisir l'éjecteur 48 et maintenir l'éjecteur 48 dans une certaine position avant le verrouillage ou déverrouillage de ce dernier. Pour effectuer cette saisie, le patin 98 a une forme complémentaire à la surface extérieure de l'éjecteur. Le patin 98 est solidarisé à une tige 100 s'étendant à travers un trou pratiqué dans la branche principale 86, un moyen élastique 102 étant positionné entre la branche principale 86 et le patin 98 pour amortir le déplacement du poussoir 96 pendant le mouvement des branches.

Le moyen élastique 102 consiste en un ressort hélicoïdal s'étendant autour de la tige 100 et dont une première extrémité prend appui sur la branche principale 86 et dont l'extrémité opposée prend appui sur le patin 98.

Comme représenté sur les figures 8 à 10, le poussoir 96 est solidarisé au patin 98 d'éjecteur de telle manière qu'il actionne le mors 70 simultanément alors que l'éjecteur est déjà saisi par le patin 98 d'éjecteur.

De manière avantageuse, mais non représenté sur les figures, le deuxième moyen de préhension 94 comporte deux guides s'étendant parallèlement à la tige 100, de part et d'autre de cette dernière, solidaires de la branche principale 86 et le long desquels est apte à coulisser le patin 98 d'éjecteur. Ces guides permettent d'améliorer la qualité du déplacement du patin 98 d'éjecteur.

Grâce à la pince décrite précédemment, nous allons pouvoir changer de manière automatisée la tournette et notamment l'éjecteur et le nez 46 de tournette selon le procédé qui sera décrit ci-après.

A cet égard, l'invention concerne également un procédé de changement de tournette automatisé.

Comme représenté aux figures 1 et 8, un bras 21 robotisé solidarisé à une pince telle que décrite précédemment, vient se positionner au niveau de la tournette à démonter. La pince est alors en position ouverte, c'est-à-dire que les branches principales 86, les premiers moyens de préhension, ainsi que les deuxièmes moyens de préhension sont dans une position écartée de façon à ne pas être en contact avec la tournette à saisir.

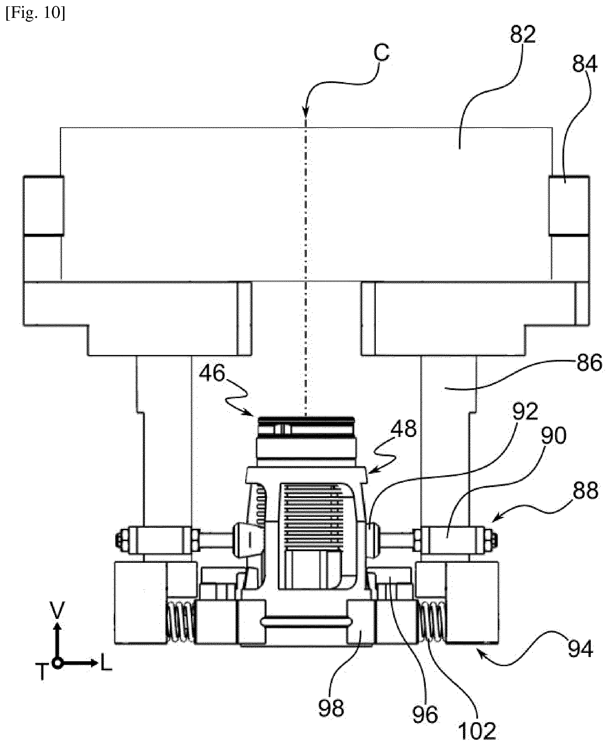

Puis, la pince saisit un nez 46 de tournette du dispositif de préhension 26 pour le bloquer en rotation et en translation le long de son axe de révolution et actionne des mors 70 du moyen de fixation du dispositif de préhension 26 pour les déplacer depuis leur position de verrouillage vers leur position de déverrouillage. Comme représentée à la [Fig.10], la pince est dans une position de saisie. Les branches principales 86 ont été déplacées pour que le premier moyen de préhension 88 soit en prise avec le nez 46 de tournette et les poussoirs 96 déverrouillent les mors 70 des moyens de fixation de l'éjecteur.

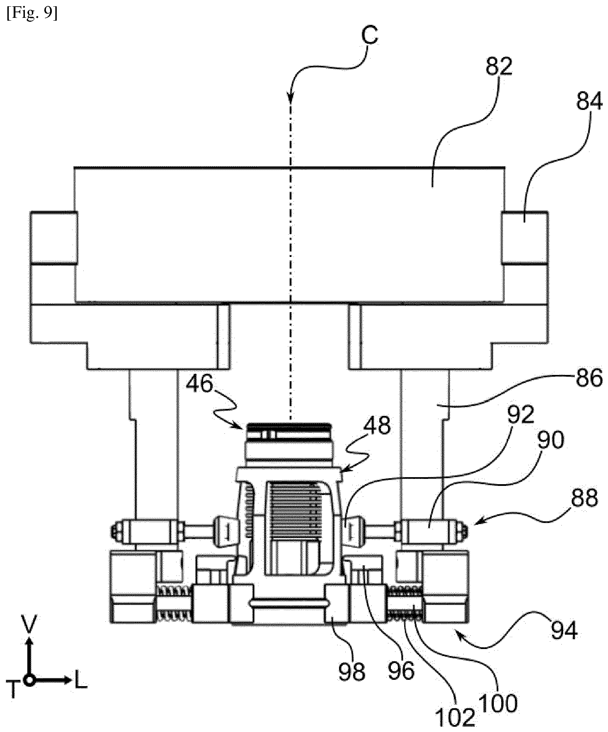

De manière avantageuse et comme représentée à la [Fig.9], la pince peut être dans une position intermédiaire. Les branches principales 86 ont été déplacées pour que le deuxième moyen de préhension 94, c'est-à-dire le patin 98 d'éjecteur soit au contact de l'éjecteur pour l'immobiliser. Par contre, les premiers moyens de préhension ne sont pas encore en contact du nez 46 de tournette et les poussoirs 96 n'ont pas encore déverrouillé les mors 70 des moyens de fixation de l'éjecteur 48.

Le mouvement notamment de translation des branches principales 86, lors de la saisie de la tournette, permet les trois étapes séquentielles suivantes : la saisie de l'éjecteur 48 par le patin 98 d'éjecteur, la saisie du nez 46 de tournette par l'embout 92 de la branche secondaire 90 et le déverrouillage des mors 70 des moyens de fixation de l'éjecteur sur le support 32.

Enfin, la pince extrait simultanément le nez 46 de tournette et l'éjecteur du dispositif de préhension 26 et les dépose dans une zone de stockage.

De manière avantageuse, le procédé consiste en l'exécution de différentes étapes additionnelles :
- saisie simultanément d'un nez 46 de tournette et d'un éjecteur 48 monté sur ledit nez de tournette et positionnés dans une zone de stockage ;
- positionnement du nez de tournette et de l'éjecteur sur le support 32 du dispositif de préhension 26 ;
- actionnement des mors 70 du dispositif de préhension 26 pour les déplacer depuis leur position de déverrouillage vers une position de verrouillage ;
- libération du nez de tournette et de l'éjecteur.

Enfin, l'ensemble nez de tournette et éjecteur est déplacé au niveau d'une zone de stockage.

## Revendications

1. Dispositif de préhension (26) d'une préforme (4) de récipient (2) en matière thermoplastique dans une unité de conditionnement thermique, qui comprend au moins :
- un support (32) comprenant un trou d'axe vertical A ;
- un mandrin d'axe de révolution B dont une première extrémité est montée dans le trou du support (32) suivant une liaison à pivot glissant par rapport audit support (32), ledit axe vertical A du support (32) et l'axe B du mandrin étant ainsi coaxiaux;
- une tournette montée sur l'extrémité opposée libre du mandrin, et qui comprend au moins :
- un nez (46) de tournette, solidarisé de manière démontable à l'extrémité libre du mandrin, ledit nez (46) de tournette étant destiné à recevoir le col (10) de la préforme (4) ;
- un éjecteur (48) se solidarisant au support (32) par des moyens de fixation amovibles, le mandrin et le nez (46) de tournette s'étendant coaxialement à l'éjecteur (48) de telle manière que l'extrémité libre du nez (46) de tournette fasse saillie dudit éjecteur (48), ledit éjecteur ayant une forme sensiblement tubulaire et comprenant à l'une de ces extrémités au moins une surface dite d'éjection de ladite préforme (4) ;
**caractérisé en ce que** lesdits moyens de fixation amovibles comprennent au moins un mors (70) solidaire de l'éjecteur (48) et/ou du support (32), chaque mors (70) comportant des moyens mâle ou femelle apte à coopérer avec des moyens complémentaires femelle ou mâle solidaires du support ou respectivement de l'éjecteur (48), et au moins un moyen élastique apte à maintenir dans une position dite de verrouillage les moyens mâle ou femelle des mors (70) dans les moyens femelle ou mâle du support ou respectivement de l'éjecteur (48).

2. Dispositif de préhension (26) selon la revendication 1 **caractérisé en ce que** chaque mors (70) pivote autour d'un axe (74) d'articulation orthogonal au mandrin d'axe de révolution (B).

3. Dispositif de préhension (26) selon l'une des revendications précédentes **caractérisé en ce que** ledit mors (70) s'étend dans un logement (72) pratiqué dans une paroi périphérique de l'éjecteur (48) ou du support (32) lorsque ledit mors (70) est en position dite verrouillage, tout ou partie dudit mors (70) faisant saillie dudit logement (72) en position dite déverrouillage.

4. Dispositif de préhension (26) selon l'une des revendications précédentes **caractérisé en ce que** les deux mors (70) sont diamétralement opposés.

5. Dispositif de préhension (26) selon l'une des revendications précédentes **caractérisé en ce que** chaque mors (70) comprend une première partie (76) et une deuxième partie (78) s'étendant de part et d'autre de l'axe (74) d'articulation, ladite première partie (76) comprenant lesdits moyens mâle ou femelle apte à coopérer avec des moyens complémentaires femelle ou mâle solidaires du support (32) ou de l'éjecteur (48) et ladite deuxième partie (78) comprenant une surface dite d'actionnement de sorte que, en exerçant une pression et/ou en relâchant ladite pression sur la surface d'actionnement, chaque mors (70) passe de sa position de déverrouillage à sa position de verrouillage et inversement.

6. Dispositif de préhension (26) selon l'une des revendications précédentes **caractérisé en ce que** le moyen de rappel élastique est un joint torique ou un ressort annulaire à spires ou un ressort de torsion.

7. Dispositif de préhension (26) selon la revendication 6 **caractérisé en ce qu'**une partie dudit moyen de rappel élastique prend appui dans une gorge (80) pratiquée dans la paroi périphérique de l'éjecteur (48) ou du support (32).

8. Pince apte et destinée à être solidarisée sur un bras (21) robotisé et à coopérer avec un dispositif de préhension (26) selon l'une quelconque des revendications 1 à 7 **caractérisée en ce que** la pince comprend au moins deux branches dites principales (86) mobiles l'une par rapport à l'autre et solidaires d'au moins une pièce mobile d'un actionneur, chaque branche principale (86) comprenant des premiers moyens dits moyen de préhension (88) aptes à saisir ledit nez (46) de tournette et des deuxièmes moyens dits moyens de préhension (94) aptes à coopérer avec lesdits mors (70) des moyens de fixation du dispositif de préhension (26) pour déplacer les mors (70) depuis leur position de verrouillage vers une position de déverrouillage.

9. Pince selon la revendication précédente **caractérisée en ce que** les moyens de préhension de chaque branche principale (86) comprennent une branche secondaire (90) s'étendant depuis la branche principale (86) en direction de la seconde branche principale (86), l'extrémité libre de la branche secondaire (90) étant apte à prendre appuie sur le nez (46) de tournette pour le saisir.

10. Pince selon la revendication 9 **caractérisée en ce que** l'extrémité libre de chaque branche secondaire (90) est munie d'un embout (92) en élastomère.

11. Pince selon la revendication 10 **caractérisée en ce que** ledit embout (92) est solidarisé à l'extrémité libre de chaque branche secondaire (90) de manière amovible.

12. Pince selon l'une quelconque des revendications 8 à 11 **caractérisée en ce que** les deuxièmes moyens de préhension (94) de chaque branche principale (86) comprennent un poussoir (96) apte à actionner les mors (70) des moyens de fixation du dispositif de préhension (26).

13. Pince selon l'une quelconque des revendications 8 à 12 **caractérisée en ce que** les deuxièmes moyens de préhension (94) de chaque branche principale (86) comprennent au moins un patin (98) dit d'éjecteur auquel est solidarisé ledit poussoir (96), ledit patin (98) d'éjecteur étant apte à saisir ledit éjecteur (48).

14. Pince selon l'une quelconque des revendications 12 à 13 **caractérisé en ce que** le poussoir (96) est solidarisé au patin (98) d'éjecteur de telle manière qu'il actionne le mors (70) simultanément à la saisie de l'éjecteur par le patin (98) d'éjecteur.

15. Pince selon l'une quelconque des revendications 12 à 14 **caractérisée en ce que** ledit poussoir (96) comprend une tige (100) s'étendant parallèlement à la branche secondaire (90) et apte à se déplacer parallèlement à cette dernière, l'extrémité libre dudit poussoir (96) comprenant une surface apte à prendre appui sur le mors (70) correspondant du moyen de fixation du dispositif de préhension (26).

16. Pince selon l'une quelconque des revendications 12 à 15 **caractérisée en ce que** ladite tige (100) s'étend à travers un trou pratiqué dans la branche principale (86), un moyen élastique (102) étant positionné entre la branche principale (86) et le patin (98) pour amortir le déplacement du poussoir (96).

17. Pince selon la revendication précédente **caractérisée en ce que** ledit moyen élastique (102) consiste en un ressort hélicoïdal s'étendant autour de la tige (100) et dont une première extrémité prend appui sur la branche principale (86) et dont l'extrémité opposée prend appui sur le patin (98).

18. Pince selon l'une quelconque des revendications 15 à 17 **caractérisé en ce que** les deuxièmes moyens de préhension (94) comportent deux guides s'étendant parallèlement à la tige (100), de part et d'autre de cette dernière, solidaires de la branche principale (86) et le long desquels est apte à coulisser le patin (98) d'éjecteur.

19. Procédé de démontage d'au moins un nez (46) de tournette d'un dispositif de préhension (26) selon l'une des revendications 1 à 7 comprenant au moins les opérations suivantes de :
- saisie du nez (46) de tournette du dispositif de préhension (26) pour le bloquer en rotation et en translation le long de son axe de révolution ;
- actionnement des mors (70) du dispositif de préhension (26) pour les déplacer depuis leur position de verrouillage vers leur position de déverrouillage ;
- extraction simultanément du nez de tournette et de l'éjecteur du dispositif de préhension (26) ;
- dépose du nez de tournette et de l'éjecteur dans une zone de stockage.

20. Procédé de montage d'au moins un nez (46) de tournette d'un dispositif de préhension (26) selon l'une des revendications 1 à 7 comprenant au moins les opérations suivantes de :
- saisie simultanément d'un nez de tournette et d'un éjecteur (48) monté sur ledit nez de tournette et positionnés dans une zone de stockage ;
- positionnement du nez de tournette et de l'éjecteur sur le support (32) du dispositif de préhension (26) ;
- actionnement des mors (70) du dispositif de préhension (26) pour les déplacer depuis leur position de déverrouillage vers une position de verrouillage ;
- libération du nez (46) de tournette et de l'éjecteur (48).

## Patentansprüche

1. Greifvorrichtung (26) für einen Vorformling (4) eines Behälters (2) aus thermoplastischem Material in einer Einheit zur thermischen Konditionierung, umfassend mindestens:
- einen Halter (32), der ein Loch mit einer vertikalen Achse A umfasst;
- einen Dorn mit einer Rotationsachse B, dessen erstes Ende in dem Loch des Halters (32) gemäß einer Drehschubgelenkverbindung in Bezug auf den Halter (32) montiert ist, wobei die vertikale Achse A des Halters (32) und die Achse B des Dorns somit koaxial sind;
- eine Spindel, die an dem entgegengesetzten freien Ende des Dorns montiert ist und die mindestens Folgendes umfasst:
- eine Spindelnase (46), die lösbar an dem freien Ende des Dorns befestigt ist, wobei die Spindelnase (46) dazu bestimmt ist, den Hals (10) des Vorformlings (4) aufzunehmen;
- einen Auswerfer (48), der an dem Halter (32) durch lösbare Fixierungsmittel befestigt ist, wobei sich der Dorn und die Spindelnase (46) koaxial zu dem Auswerfer (48) erstrecken, so dass das freie Ende der Spindelnase (46) von dem Auswerfer (48) abragt, wobei der Auswerfer eine im Wesentlichen rohrförmige Form aufweist und an einem seiner Enden mindestens eine sogenannte Auswurffläche für den Vorformling (4) umfasst;
**dadurch gekennzeichnet, dass** die lösbaren Fixierungsmittel mindestens eine Backe (70) umfassen, die integral mit dem Auswerfer (48) und/oder dem Halter (32) ausgebildet ist, wobei jede Backe (70) männliche oder weibliche Mittel umfasst, die geeignet sind, mit komplementären weiblichen oder männlichen Mitteln zusammenzuwirken, die integral mit dem Halter bzw. dem Auswerfer (48) ausgebildet sind, und mindestens ein elastisches Mittel, das geeignet ist, die männlichen oder weiblichen Mittel der Backen (70) in den weiblichen oder männlichen Mitteln des Halters bzw. des Auswerfers (48) in einer sogenannten Verriegelungsstellung zu halten.

2. Greifvorrichtung (26) nach Anspruch 1, **dadurch gekennzeichnet, dass** jede Backe (70) um eine Gelenkachse (74) schwenkt, die orthogonal zu dem Dorn mit der Rotationsachse (B) verläuft.

3. Greifvorrichtung (26) nach einem der vorhergehenden Ansprüche, **dadurch gekennzeichnet, dass** sich die Backe (70) in einer Aufnahme (72) erstreckt, die in einer Umfangswand des Auswerfers (48) oder des Halters (32) ausgebildet ist, wenn die Backe (70) in der sogenannten Verriegelungsstellung ist, wobei die gesamte oder ein Teil der Backe (70) in der sogenannten Entriegelungsstellung von der Aufnahme (72) abragt.

4. Greifvorrichtung (26) nach einem der vorhergehenden Ansprüche, **dadurch gekennzeichnet, dass** die beiden Backen (70) diametral entgegengesetzt sind.

5. Greifvorrichtung (26) nach einem der vorhergehenden Ansprüche, **dadurch gekennzeichnet, dass** jede Backe (70) einen ersten Teil (76) und einen zweiten Teil (78) umfasst, die sich beidseits der Gelenkachse (74) erstrecken, wobei der erste Teil (76) die männlichen oder weiblichen Mittel umfasst, die geeignet sind, mit komplementären weiblichen oder männlichen Mitteln zusammenzuwirken, die integral mit dem Halter (32) oder dem Auswerfer (48) ausgebildet sind, und wobei der zweite Teil (78) eine sogenannte Betätigungsfläche umfasst, so dass jede Backe (70), indem ein Druck auf die Betätigungsfläche ausgeübt wird und/oder der Druck zurückgenommen wird, aus ihrer Entriegelungsstellung in ihre Verriegelungsstellung und umgekehrt übergeht.

6. Greifvorrichtung (26) nach einem der vorhergehenden Ansprüche, **dadurch gekennzeichnet, dass** das elastische Rückstellmittel ein O-Ring oder eine Ringfeder mit Windungen oder eine Torsionsfeder ist.

7. Greifvorrichtung (26) nach Anspruch 6, **dadurch gekennzeichnet, dass** ein Teil des elastischen Rückstellmittels in einer Nut (80), die in der Umfangswand des Auswerfers (48) oder des Halters (32) ausgebildet ist, zur Anlage kommt.

8. Zange, die dazu geeignet und bestimmt ist, an einem Roboterarm (21) befestigt zu werden und mit einer Greifvorrichtung (26) nach einem der Ansprüche 1 bis 7 zusammenzuwirken, **dadurch gekennzeichnet, dass** die Zange mindestens zwei sogenannte Hauptschenkel (86) umfasst, die relativ zueinander beweglich sind und integral mit mindestens einem beweglichen Teil eines Aktuators ausgebildet sind, wobei jeder Hauptschenkel (86) erste Mittel, Greifmittel (88) genannt, umfasst, die geeignet sind, die Spindelnase (46) zu erfassen, und zweite Mittel, Greifmittel (94) genannt, die geeignet sind, mit den Backen (70) der Fixierungsmittel für die Greifvorrichtung (26) zusammenzuwirken, um die Backen (70) aus ihrer Verriegelungsstellung in eine Entriegelungsstellung zu verlagern.

9. Zange nach dem vorhergehenden Anspruch, **dadurch gekennzeichnet, dass** die Greifmittel jedes Hauptschenkels (86) einen Nebenschenkel (90) umfassen, der sich von dem Hauptschenkel (86) aus in Richtung des zweiten Hauptschenkels (86) erstreckt, wobei das freie Ende des Nebenschenkels (90) geeignet ist, an der Spindelnase (46) zur Anlage zu kommen, um sie zu erfassen.

10. Zange nach Anspruch 9, **dadurch gekennzeichnet, dass** das freie Ende jedes Nebenschenkels (90) mit einem Endstück (92) aus Elastomer versehen ist.

11. Zange nach Anspruch 10, **dadurch gekennzeichnet, dass** das Endstück (92) an dem freien Ende jedes Nebenschenkels (90) lösbar befestigt ist.

12. Zange nach einem der Ansprüche 8 bis 11, **dadurch gekennzeichnet, dass** die zweiten Greifmittel (94) jedes Hauptschenkels (86) einen Schieber (96) umfassen, der geeignet ist, die Backen (70) der Fixierungsmittel der Greifvorrichtung (26) zu betätigen.

13. Zange nach einem der Ansprüche 8 bis 12, **dadurch gekennzeichnet, dass** die zweiten Greifmittel (94) jedes Hauptschenkels (86) mindestens einen sogenannten Auswerferschuh (98) umfassen, an dem der Schieber (96) befestigt ist, wobei der Auswerferschuh (98) geeignet ist, den Auswerfer (48) zu erfassen.

14. Zange nach einem der Ansprüche 12 bis 13, **dadurch gekennzeichnet, dass** der Schieber (96) an dem Auswerferschuh (98) so befestigt ist, dass er die Backe (70) gleichzeitig mit dem Erfassen des Auswerfers durch den Auswerferschuh (98) betätigt.

15. Zange nach einem der Ansprüche 12 bis 14, **dadurch gekennzeichnet, dass** der Schieber (96) eine Stange (100) umfasst, die sich parallel zu dem Nebenschenkel (90) erstreckt und geeignet ist, sich parallel zu diesem zu verlagern, wobei das freie Ende des Schiebers (96) eine Fläche umfasst, die geeignet ist, an der entsprechenden Backe (70) des Fixierungsmittels der Greifvorrichtung (26) zur Anlage zu kommen.

16. Zange nach einem der Ansprüche 12 bis 15, **dadurch gekennzeichnet, dass** sich die Stange (100) durch ein in dem Hauptschenkel (86) ausgebildetes Loch erstreckt, wobei ein elastisches Mittel (102) zwischen dem Hauptschenkel (86) und dem Schuh (98) angeordnet ist, um die Verlagerung des Schiebers (96) zu dämpfen.

17. Zange nach dem vorhergehenden Anspruch, **dadurch gekennzeichnet, dass** das elastische Mittel (102) aus einer Schraubenfeder besteht, die sich um die Stange (100) erstreckt und deren erstes Ende an dem Hauptschenkel (86) zur Anlage kommt und deren entgegengesetztes Ende an dem Schuh (98) zur Anlage kommt.

18. Zange nach einem der Ansprüche 15 bis 17, **dadurch gekennzeichnet, dass** die zweiten Greifmittel (94) zwei Führungen umfasst, die sich parallel zu der Stange (100) beidseits von dieser erstrecken, die integral mit dem Hauptschenkel (86) ausgebildet sind und an denen der Auswerferschuh (98) entlanggleiten kann.

19. Verfahren zur Demontage mindestens einer Spindelnase (46) einer Greifvorrichtung (26) nach einem der Ansprüche 1 bis 7, umfassend mindestens die folgenden Arbeitsschritte:
- Erfassen der Spindelnase (46) der Greifvorrichtung (26), um sie rotatorisch und translatorisch entlang ihrer Rotationsachse zu blockieren;
- Betätigen der Backen (70) der Greifvorrichtung (26), um sie aus ihrer Verriegelungsstellung in ihre Entriegelungsstellung zu verlagern;
- gleichzeitiges Abziehen der Spindelnase und des Auswerfers von der Greifvorrichtung (26);
- Absetzen der Spindelnase und des Auswerfers in einem Lagerbereich.

20. Verfahren zur Montage mindestens einer Spindelnase (46) einer Greifvorrichtung (26) nach einem der Ansprüche 1 bis 7, umfassend mindestens die folgenden Arbeitsschritte:
- gleichzeitiges Erfassen einer Spindelnase und eines an der Spindelnase montierten Auswerfers (48), die in einem Lagerbereich positioniert sind;
- Positionieren der Spindelnase und des Auswerfers an dem Halter (32) der Greifvorrichtung (26);
- Betätigen der Backen (70) der Greifvorrichtung (26), um sie aus ihrer Entriegelungsstellung in eine Verriegelungsstellung zu verlagern;
- Freigeben der Spindelnase (46) und des Auswerfers (48).

## Claims

1. Gripping device (26) for gripping a preform (4) of a container (2) made of thermoplastic material in a thermal conditioning unit, which comprises at least:
- a support (32) with a hole of vertical axis A;
- a mandrel with an axis of revolution B, a first end of which is mounted in the hole of the support (32) via a connection pivotably slidingly relative to said support (32), said vertical axis A of the support (32) and the axis B of the mandrel thus being coaxial;
- a spinner mounted on the free opposite end of the mandrel, and which comprises at least:
- a spinner nose (46) rigidly secured removably to the free end of the mandrel, said spinner nose (46) being intended to receive the neck (10) of the preform (4);
- an ejector (48) rigidly secured to the support (32) by removable attachment means, the mandrel and the spinner nose (46) extending coaxially with the ejector (48) in such a way that the free end of the spinner nose (46) projects from said ejector (48), said ejector having a substantially tubular shape and comprising at one of its ends at least one surface referred to as an ejection surface for ejecting said preform (4);
**characterized in that** said removable attachment means comprise at least one jaw (70) rigidly secured to the ejector (48) and/or to the support (32), each jaw (70) comprising male or female means adapted to interact with complementary female or male means rigidly secured to the support or respectively to the ejector (48), and at least one elastic means adapted to keep the male or female means of the jaws (70) in a position, referred to as the locking position, in the female or male means of the support or respectively of the ejector (48).

2. Gripping device (26) according to Claim 1, **characterized in that** each jaw (70) pivots about an articulation axis (74) orthogonal to the mandrel of axis of revolution (B).

3. Gripping device (26) according to one of the preceding claims, **characterized in that** said jaw (70) extends in a housing (72) made in a peripheral wall of the ejector (48) or of the support (32) when said jaw (70) is in the position referred to as the locking position, all or part of said jaw (70) projecting from said housing (72) in the position referred to as the unlocking position.

4. Gripping device (26) according to one of the preceding claims, **characterized in that** the two jaws (70) are diametrically opposite one another.

5. Gripping device (26) according to one of the preceding claims, **characterized in that** each jaw (70) comprises a first part (76) and a second part (78) extending on either side of the articulation axis (74), said first part (76) comprising said male or female means adapted to interact with complementary female or male means rigidly secured to the support (32) or to the ejector (48) and said second part (78) comprising a surface referred to as the actuating surface such that, by exerting pressure on and/or releasing said pressure on the actuating surface, each jaw (70) passes from its unlocking position to its locking position and vice versa.

6. Gripping device (26) according to one of the preceding claims, **characterized in that** the elastic return means is an O-ring or a coiled annular spring or a torsion spring.

7. Gripping device (26) according to Claim 6, **characterized in that** a part of said elastic return means bears in a groove (80) made in the peripheral wall of the ejector (48) or of the support (32).

8. Clamp adapted and intended to be rigidly secured to a robotic arm (21) and to interact with a gripping device (26) according to any one of Claims 1 to 7, **characterized in that** the clamp comprises at least two branches referred to as main branches (86) that are movable relative to one another and rigidly secured to at least one movable component of an actuator, each main branch (86) comprising first means referred to as gripping means (88) adapted to grip said spinner nose (46) and second means referred to as gripping means (94) adapted to interact with said jaws (70) of the attachment means of the gripping device (26) to move the jaws (70) from their locking position to an unlocking position.

9. Clamp according to the preceding claim, **characterized in that** the gripping means of each main branch (86) comprise a secondary branch (90) extending from the main branch (86) toward the second main branch (86), the free end of the secondary branch (90) being adapted to bear on the spinner nose (46) so as to grip the latter.

10. Clamp according to Claim 9, **characterized in that** the free end of each secondary branch (90) is provided with an elastomer tip (92).

11. Clamp according to Claim 10, **characterized in that** said tip (92) is rigidly secured removably to the free end of each secondary branch (90).

12. Clamp according to any one of Claims 8 to 11, **characterized in that** the second gripping means (94) of each main branch (86) comprise a pusher (96) adapted to actuate the jaws (70) of the attachment means of the gripping device (26).

13. Clamp according to any one of Claims 8 to 12, **characterized in that** the second gripping means (94) of each main branch (86) comprise at least one pad (98) referred to as an ejector pad to which said pusher (96) is rigidly secured, said ejector pad (98) being adapted to grip said ejector (48).

14. Clamp according to any one of Claims 12 to 13, **characterized in that** the pusher (96) is rigidly secured to the ejector pad (98) in such a way that it actuates the jaw (70) simultaneously when the ejector is gripped by the ejector pad (98).

15. Clamp according to any one of Claims 12 to 14, **characterized in that** said pusher (96) comprises a rod (100) extending parallel to the secondary branch (90) and adapted to move parallel to the latter, the free end of said pusher (96) comprising a surface adapted to bear on the corresponding jaw (70) of the attachment means of the gripping device (26).

16. Clamp according to any one of Claims 12 to 15, **characterized in that** said rod (100) extends through a hole made in the main branch (86), an elastic means (102) being positioned between the main branch (86) and the pad (98) to dampen the movement of the pusher (96).

17. Clamp according to the preceding claim, **characterized in that** said elastic means (102) consists of a helical spring extending around the rod (100) and of which a first end bears on the main branch (86) and of which the opposite end bears on the pad (98).

18. Clamp according to any one of Claims 15 to 17, **characterized in that** the second gripping means (94) comprise two guides extending parallel to the rod (100), on either side of the latter, rigidly secured to the main branch (86) and along which the ejector pad (98) is adapted to slide.

19. Method for dismantling at least one spinner nose (46) of a gripping device (26) according to one of Claims 1 to 7, comprising at least the following operations:
- gripping the spinner nose (46) of the gripping device (26) to block it in rotation and in translation along its axis of revolution;
- actuating the jaws (70) of the gripping device (26) to move them from their locking position to their unlocking position;
- simultaneously extracting the spinner nose and the ejector from the gripping device (26);
- taking the spinner nose and the ejector to a storage area.

20. Method for mounting at least one spinner nose (46) of a gripping device (26) according to one of Claims 1 to 7, comprising at least the following operations:
- simultaneously gripping a spinner nose and an ejector (48) mounted on said spinner nose and positioned in a storage area;
- placing the spinner nose and the ejector on the support (32) of the gripping device (26);
- actuating the jaws (70) of the gripping device (26) to move them from their unlocking position to a locking position;
- releasing the spinner nose (46) and the ejector (48).
